Europäisches Patentamt

European Patent Office

Office européen des brevets

(19)

(11) Publication number: **0 232 984**
A1

(12) **EUROPEAN PATENT APPLICATION**

(21) Application number: 87300353.7

(22) Date of filing: 16.01.87

(51) Int. Cl.⁴: **B 60 T 7/04**

(30) Priority: 06.02.86 US 826893

(43) Date of publication of application:
19.08.87 Bulletin 87/34

(84) Designated Contracting States: **DE FR GB**

(71) Applicant: **GENERAL MOTORS CORPORATION**
**General Motors Building 3044 West Grand Boulevard**
**Detroit Michigan 48202 (US)**

(72) Inventor: **Parker, Donald Lee**
**7967 Meyers Road**
**Middletown Ohio 45042 (US)**

(74) Representative: **Breakwell, John Neil Bower et al**
**GM Patent Section Vauxhall Motors Limited Luton Office**
**(F6) P.O. Box No. 3 Kimpton Road**
**Luton Bedfordshire LU2 OSY (GB)**

(54) **Push rod to pedal arm connection.**

(57) A brake pedal arm (16) has a push rod mounting bracket (22) slotted to receive a reduced-diameter portion (44) of the push rod (38) when a booster assembly (32) of which the push rod is a part is installed from the forward side of a vehicle dash (12). The mounting bracket has body sections (60 and 62) formed at an angle (68) to locate the push rod and keep it from becoming disengaged from the mounting bracket once the assembly connection has been completed. A bumper (90) provided on the push rod eliminates clicking noises which might otherwise be generated by engagement of the push rod and the pedal arm bracket during fast release of the pedal arm.

Fig. 1

EP 0 232 984 A1

## Description

## PUSH ROD TO PEDAL ARM CONNECTION

This invention relates to a push rod to pedal arm connection such as that used in connecting an actuating push rod of a brake booster mechanism to a pedal arm such as the pivoted brake pedal arm in a vehicle.

The conventional type of push rod to pedal arm connection has used a pin extending through an opening in the pedal arm, the rear end of the push rod being provided with an eye through which the pin extends, with a spring wave washer on the pin and a clip placed over the end of the pin to hold the entire assembly in place. This type of connection has required assembly from the passenger compartment side of the vehicle dash: such assembly is time-consuming in that first the spring washer must be placed on the pin, then the push rod eye must be placed on the pin, and finally the retainer clip must be put in place by hand.

The present invention is concerned with providing a push rod to pedal arm connection which makes it possible for the push rod to be installed from the forward compartment-side of the vehicle dash, and which further does not require the time-consuming operation of inserting a pin through an eye and placing a clip on the end of the pin.

To this end a push rod to pedal arm connection in accordance with the present invention comprises the combination of features specified in claim I.

A push rod to pedal arm connection in accordance with the present invention is particularly suitable for use with a pivoting type of brake booster mounting arrangement such as that shown in EP-A- (Serial No ), corresponding to USSN 826,887 filed 6 February 1986. In that arrangement, the booster has a mounting bracket secured thereto which has a suitable pivoting connection to the forward compartment-side of the dash, with the booster input rod being already attached to the booster and during installation being inserted through an opening in the dash so that it is positioned near the pedal arm and in the bracket in conformity with the present invention to provide the required connection. The assembly operation is completed by then pivoting the booster into place and fastening it in position by means of suitable mounting bolts.

During the installation of the arangement as described, the push rod is inherently positioned so that it will slide downwardly to its final assembly position and then remain in that position without the need for further attachment operations.

In the drawing:

Figure I is a fragmentary elevational view, with parts broken away and in section, illustrating a preferred embodiment of a push rod to pedal arm connection in accordance with the present invention, immediately after it has been partially installed in connected relation and before a booster assembly including the push rod has been pivoted into, and secured in, its fully installed position;

Figure 2 is a view similar to Figure I but showing the booster assembly and its push rod in the fully installed position, the push rod and booster assembly having moved a brake pedal arm to its normal released position; and

Figure 3 is an enlarged fragmentary perspective view of the push rod connection illustrated in Figures I and 2.

With reference now to the drawing, a portion of a vehicle I0 includes a dash I2 and a suitable vehicle body portion I4, which may be a bracket or panel positioned in a generally fore-and-aft plane parallel to the normal plane of movement of a brake pedal arm I6. The pedal arm I6 is illustrated somewhat schematically as having its upper end 20 pivotally attached to the vehicle body portion I4 so that the arm can pivot about an axis I8, that axis being substantially perpendicular to the plane of pivotal movement of the pedal arm I6. The lower end of the pedal arm I6, not shown, is provided with a conventional pedal for actuation by the foot of the vehicle operator.

A bracket 22 is secured to one side 24 of the pedal arm I6 in spaced relation to the pivot axis I8 in a direction along the pedal arm I6 towards the pedal.

The dash I2 is illustrated as having a booster mounting bracket 26 secured to its forward side 28. The dash also has an opening 30 extending therethrough. A booster assembly 32 is illustrated as having a mounting bracket 34 with a pivoting mount end 36 co-operating with the bracket 26 so that the booster assembly is positioned as shown in Figure I for initial installation.

The booster assembly 32 has a push rod 38 extending rearwardly therefrom, with the forward end 40 of the push rod being suitably secured to the booster assembly for actuation and release thereof in a manner well known in the art. A rear end 42 of the push rod 38 has a reduced-diameter portion 44 formed adjacent the extreme rear end surface 46 of the push rod but spaced axially towards the forward end 40 of the push rod along the longitudinal axis 48 of the push rod. The reduced-diameter portion 44 is defined by a pair of axially spaced shoulders 50 and 52. For reasons further described below, these shoulders 50 and 52 are rounded to provide bearing-like surfaces.

The bracket 22 has a body portion 54 and mounting means formed by flanges 56 and 58. The bracket body portion 54 is generally perpendicular to the side 24 of the pedal arm I6, and the flanges 56 and 58 are parallel thereto so as to provide securing means securing the bracket 54 of the pedal arm. The flanges 56 and 58 may be welded or otherwise secured to the pedal arm I6.

The bracket body portion 54 is defined by an upper body section 60 and a lower body section 62 joined together by a radius-bend surface 64. As can be seen, the body portion 54 has a bend in it formed along a bend axis 66, so that the upper body section 60 and the lower body section 62 are positioned at an angle 68 to define a concave bracket side 70. The concave bracket side 70 faces forwardly towards the dash opening 30 and the booster assembly 32. The bend axis 66 is substantially perpendicular to the side 24 of the pedal arm 16, and therefore is substantially perpendicular to the plane of movement of the pedal arm 16.

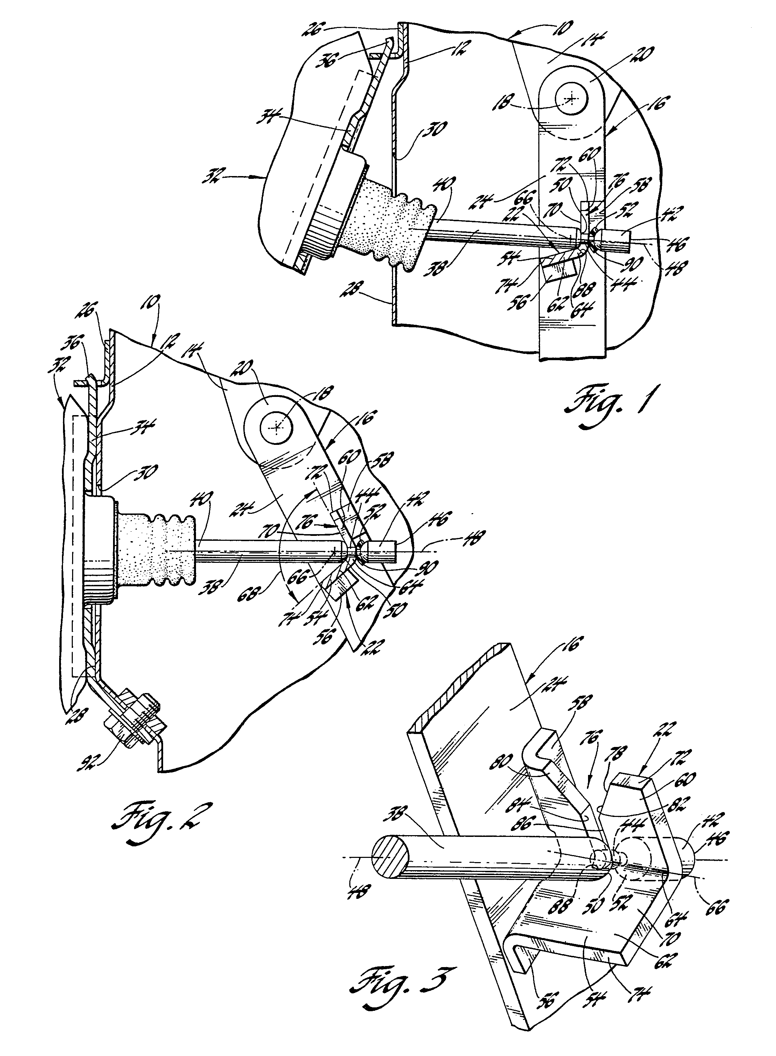

The end 72 of the upper body section 60 which is positioned remotely from the bend axis 66, and the end 74 of the lower body section 62 which is positioned remotely from the bend axis 66, are positioned so that they are no further away from the booster assembly 32, and therefore from the forward end 40 of the push rod 38, than is the bend axis 66. In the normal release position shown in Figure 2, the ends 72 and 74 of the body sections 60 and 62 are closer to the forward end 40 of the push rod 38 than is the bend axis 66. The full stroke of the pedal arm is such that at no time is either the end 72 or the end 74 positioned further away from the push rod end 40 than is the bend axis 66. This ensures retention of the push rod 38 in position in the bracket 22, as will be further indicated below.

The bracket upper body section 60 is provided with a slot 76 that is cut through the upper body section end 72 and extends downwardly to the area of the bend axis 66. The slot 76 has an outer end 78 forming a slot entry defined by slot guide sides 80 and 82. The slot guide sides 80 and 82 are non-parallel, being in a generally V-like arrangement with the wider-opening part at the bracket end 72, the guide sides 80 and 82 tapering the slot entry inwardly so that the slot entry narrows as it extends further away from the bracket body section end 72. The slot 76 is there defined by retainer sides 84 and 86, which are parallel-slot side surfaces that join the non-parallel guide sides 80 and 82 at their upper ends and extend to the area of the bend axis 66, where the slot inner end 88 is located. The slot inner end 88 may be formed to have a semi-circular shape.

Prior to installation of the booster assembly 32 with its push rod 38, the pedal arm 16 may be hanging vertically from the pivot axis 18. As ilustrated, the upper body section of the bracket 22 is also substantially vertical, so that its slot 76 opens upwardly. The assembly operator will insert the push rod 38 through the opening 30 so that the reduced-diameter portion 44 is positioned over the slot outer end 78. The push rod 38 is then released, and will immediately drop through the slot 76 to the position illustrated in Figure 1. The slot guide sides 80 and 82, being somewhat wider than the push rod 38, will guide the push rod so that the retainer sides 84 and 86 readily receive the reduced-diameter portion 44 of the push rod as this occurs. Thus the reduced-diameter portion 44 of the push rod 38 will be positioned in the area of the slot inner end 88. The rounded shoulder 50 of the push rod will have its rounded portion engaging a part of the radius-bend surface 64 in a ball and socket-like manner, as illustrated in Figure 1.

It has been found desirable to provide a bumper 90 over a part of the reduced-diameter portion 44 immediately adjacent the shoulder 52, the bumper preferably being shaped to fit the rounded shoulder, as shown in the drawing. The bumper may be made of rubber or some other rubber-like material. It is the function of the bumper to axially separate the shoulder 52 from the adjacent side of the bracket body portion 54 so that upon quick release of the pedal arm there is no clicking noise generated between the bracket and the push rod. The shoulder 52 operatively engages the bracket 22 on the side of the radius bend surface 64 opposite the side of the radius bend engaged by the shoulder 50.

Once the push rod 38 has reached the position shown in Figure 1, the booster pivot mount end 36 is secured to the mounting bracket 26, and the booster assembly is pivoted to its fully assembled position shown in Figure 2. The booster mounting bolt assembly 92 is tightened in place, so securely mounting the booster assembly 32 on the forward side of the dash 12. The pivoting movement of the booster assembly 32 exerts a force along the longitudinal axis 48 of the push rod 38, so moving the pedal arm 16 to the released position illustrated in Figure 2. Thus the concave bracket side 70 of the bracket body portion 54, formed by the angle 68 of the body sections 60 and 62, retains the push rod 38 in position as the brake pedal is actuated and released.

In operation, the pedal arm 16 will normally not be depressed as far as the position illustrated in Figure 1, so that the forward sides of the upper and lower body sections 60 and 62 will always be at such an angle relative to the longitudinal axis 48 of the push rod that the push rod 38 is retained in engagement with the radius bend surface 64, and will not tend to move upwardly in the slot 76. The connection is therefore maintained under all such conditions of operation.

When the push rod is in position in the slot inner end, the shoulders 50 and 52 operatively engage the bracket body portion 54, and more particularly the upper body section 60, the lower body section 62 and the radius bend surface 64, on opposite sides thereof. The shoulders 50 and 52 are in force-transmitting relation with the bracket body. When the pedal arm 16 is pivoted in the actuating direction, the shoulder 50 receives the actuating force from the bracket 22 and transmits it through the push rod 38 to the booster assembly 32. Upon pedal release, the shoulder 52, by way of the bumper 90, receives force from the bracket 22 and transmits it to the push rod 38 in a pulling manner with respect to the booster assembly 32 if the usual booster power wall return spring (not shown) has not moved the booster power wall and booster valve assembly (also not shown), and therefore the push rod 38, so as to keep up with the releasing movement of the pedal arm 16. The shoulders 50 and 52 are thus positioned so as to be able to transmit forces along the longitudinal axis 48 of the push rod 38 between the push rod and the bracket 22, and therefore the pedal arm 16, in both directions.

## Claims

I. A connection between a pedal arm and a push rod for a brake booster, in which a pivotally mounted pedal arm (I6) is pivotally movable in a plane, a push rod (38) is normally positioned with its longitudinal axis parallel to the plane of pivotal movement of the pedal arm (I6), and the push rod (38) has one end connected for actuation of a brake booster (32) and the other end connected for the transmission of forces between the push rod (38) and the pedal arm (I6), characterised in that the push rod (38) has a reduced-diameter portion (44) disposed adjacent the said other end defined by axially spaced shoulders (50,52), and that a bracket (22) is secured to the pedal arm (I6), the bracket (22) having a body portion (54) and mounting means (56,58) by way of which the bracket (22) is secured to the pedal arm (I6), the body portion (54) being bent to define a radius bend surface (64) along a bend axis (66) substantially perpendicular to the plane of pivotal movement of the pedal arm (I6), to provide an upper body section (60) and a lower body section (62), the body sections (60,62) having ends (72,74) remotely spaced from the bend axis (66) and normally located closer to the said one end of the push rod (38) than is the bend axis (66), the upper body section (60) having an open-ended slot (76) formed therein, the slot (76) having an outer end (78) opening through the remotely spaced end of the upper body section (60), the slot (76) extending towards the bend axis (66) and terminating in a slot inner end (88) located substantially on the bend axis (66), the slot outer end (78) defining a slot entry for receiving the reduced-diameter portion (44) of the push rod (38) during installation connection of the push rod (38) to the pedal arm (I6), and slot retainer sides (84,86) joining the slot entry and the inner end (88) of the slot (76), the slot retainer sides (84,86) being spaced apart so that the width of the slot (76) from the slot entry to the slot inner end (88) is at least as large as the diameter of the reduced-diameter portion (44) of the push rod (38) so as to receive the reduced-diameter portion (44) of the push rod (38) therebetween in sliding guided relation during installation connection of the push rod (38) to the pedal arm (I6), whereby the push rod (38) is connected to the pedal arm (I6) by positioning the reduced-diameter portion (44) in the slot entry and sliding it into the slot (76) so that it is positioned in the inner end (88) of the slot (76) with the shoulders (50,52) operatively engaging opposite sides of the bracket body portion (54) in the vicinity of the radius bend surface (64) in force-transmitting relation, with one (50) of the shoulders (50,52) receiving force from pivotal movement of the pedal arm (I6) in one direction and the other (52) of the shoulders (50,52) receiving force from pivotal movement of the pedal arm (I6) in the opposite direction, the shoulders (50,52) also being capable of delivering force from the push rod (38) to the pedal arm (I6) in the said one direction and in the opposite direction, the angle (68) of the bracket bend formed by the upper and lower body sections (60,62) of the bracket (22) at the bend axis (66) then preventing removal of the push rod (38) from the inner end (88) of the slot (76) once the brake booster (32) has been secured in operational relation to the pedal arm (I6).

2. A connection according to claim I, characterised in that the upper body section (60) and the lower body section (62) each comprise a planar body section having an end remotely spaced from the bend axis (66) and normally located closer to the said one end of the push rod (38) than is the bend axis (66), so that the body sections (60,62) and the radius bend surface (64) present a concave bracket side opening towards the said one end of the push rod (38), the open-ended slot (76) formed in the upper body section (60) has an outer end (78) as aforesaid and also a centre section and an inner end (88), the outer end (78) of the slot (76) opens through the remotely spaced end of the upper body section (60) and is defined by non-parallel guide sides (80,82) converging towards the centre section of the slot (76), the centre section of the slot (76) has slot retainer sides (84,86) as aforesaid joining the guide sides (80,82) of the outer end (78) of the slot (76) and the inner end (88) of the slot (76), and the slot retainer sides (84,86) are substantially parallel to one another and spaced apart so that the width of the centre section of the slot (76) between the slot retainer sides (84,86) is at least as large as the diameter of the reduced-diameter portion (44) of the push rod (38), with the push rod (38) being connected to the pedal arm (I6) by positioning the reduced-diameter portion (44) of the push rod (38) in the outer end (78) of the slot (76) and sliding it into the slot (76) through the outer end (78) and the centre section of the slot (76) so that it is positioned in the inner end (88) of the slot (76) with the shoulders (50,52) operatively engaging the bracket body portion (54) and the radius bend surface (64) on opposite sides thereof in force-transmitting relation, and in a fully installed condition the angle (68) of the concave bracket side formed by the upper and lower body sections (60,62) of the bracket (22) at the bend axis (66) prevents removal of the push rod (38) from the inner end (88) of the slot (76) once the brake booster (32) has been secured in operational relation to the pedal arm (I6).

3. A connection according to claim I or 2, characterised in that a shock and noise-absorbing bumper (90) is located in the reduced-diameter portion (44) of the push rod (38), axially between the bracket (22) and the shoulder (52) adjacent the said other end of the push rod (38), and is effective to eliminate clicking-like noises during fast release of the pedal arm (I6) following actuating movement thereof.

0232984

Fig. 1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 118 118 (OPEL) <br> * Abstract; Figure 1 * | 1 | B 60 T 7/04 |
| A | FR-A-2 520 686 (GULF + WESTERN) <br> * Page 9, lines 17-21; figure 1 * | 1 | |
| A | WO-A-8 600 732 (ROST) <br> * Abstract; figure 1 * | 1 | |

---

TECHNICAL FIELDS SEARCHED (Int. Cl.4)

B 60 T
G 05 G

The present search report has been drawn up for all claims

| Place of search | Date of completion of the search | Examiner |
|---|---|---|
| THE HAGUE | 13-05-1987 | BLURTON M.D |